# EUROPÄISCHE PATENTSCHRIFT

(11) **EP 3 109 489 B1**
(45) Veröffentlichungstag und Bekanntmachung des Hinweises auf die Patenterteilung: **12.12.2018**
(21) Anmeldenummer: 16167385.0
(22) Anmeldetag: 28.04.2016
(51) Int. Cl.: F16B 12/24, F16B 13/12, A47B 47/04

(54) **MÖBEL, INSBESONDERE SCHRANKMÖBEL FÜR WOHNFAHRZEUGE**
FURNITURE, IN PARTICULAR CUPBOARDS FOR MOTOR HOMES
MEUBLES, EN PARTICULIER ARMOIRE POUR CARAVANES

(30) Priorität: 24.06.2015 DE 102015110148
(43) Veröffentlichungstag der Anmeldung: 28.12.2016
(73) Patentinhaber: Hymer GmbH & Co. KG, 88339 Bad Waldsee (DE)
(72) Erfinder: Schroll, Michael, 88353 Kisslegg (DE)
(74) Vertreter: Otten, Roth, Dobler & Partner mbB Patentanwälte

(56) Entgegenhaltungen:
- DE-A1- 2 452 398
- DE-A1- 4 141 687
- DE-B- 1 136 813
- DE-B3- 10 229 300
- US-A- 3 172 603

## Beschreibung

Die Erfindung betrifft ein Möbel, insbesondere Schrankmöbel für Wohnfahrzeuge nach dem Oberbegriff des Anspruchs 1.

### Stand der Technik

Wohnfahrzeuge und insbesondere Wohnmobile und Wohnwagen sind mit Schrankmöbeln aller Art ausgestattet, wobei diese vorzugsweise als Standschränke oder Hängeschränke ausgebildet sind.

Der Trend zur Leichtbauweise, insbesondere zur Erzielung eines zulässigen Gesamtgewichts von nicht mehr als 3,5 t pro Fahrzeug, zwingt die Hersteller zur kontinuierlichen Leichtbauweise in allen Bauteilen des Fahrzeugs. So werden insbesondere auch die Schrankmöbel mit immer leichtern Holzarten hergestellt, um Gewicht einzusparen. Dabei werden zum Beispiel Wabenelemente oder Styroporfüllungen eingesetzt, die die Festigkeit der Wandverbindungen erheblich beeinträchtigen. Insbesondere die Dauerbelastung von schwachen Wandverbindungen führt zu nachhaltigen Schäden zum Beispiel der Einbauschränke.

Zur Herstellung stabiler Schrankmöbeln werden zum Beispiel Sperrholzplatten (Multiplex-Platten) mit einem beidseitigem Oberflächenfurnier verwendet, die eine Gesamtdicke von 10mm aufweisen können. Die Verbindung zweier Schrankwände wird z.B. durch eine Vielzahl von Bohrungen stirnseitig in eine Wandung bewerkstelligt, in welche entsprechende Dübel eingesetzt werden, wobei eine Schraubverbindung zwischen zwei Schrankwänden eine feste Verbindung ermöglicht. Das stirnseitige Vorbohren von Löchern verhindert ein Aufspreizen der dünnen Wand und einer Schrankwand, sodass die Verwendung von Dübeln die Beschädigung der Wände beim Eindrehen von Schrauben durch Aufspreizung verhindert. Der Zusammenbau der Schrankmöbel erfolgt üblicherweise mit einer Dübelanordnung von 6mm Durchmesser, d.h. es bleiben ca. 2mm Restwandstärke bei symmetrischen Anordnung stirnseitig eingesetzter Dübel als Wandstärke übrig.

Die Verwendung noch dünnerer Wandstärken der furnierten Sperrholzplatten erscheint nicht möglich, da das Aufspreizen der Dübeln beim Einschrauben von Befestigungsschrauben eine nicht gewünschte Beschädigung des Furniers erzeugt. Die Verwendung von dünneren Wandstärken der Schrankwände mit dünneren Dübeln und entsprechenden dünneren Schrauben ist aus Festigkeitsgründen nicht gewünscht.

Ein Verbindungssystem für Bauteile, insbesondere für Möbelteile ist aus der DE 102 29 300 B3 bekannt. Das bekannte Verbindungssystem ist dreiteilig und besitzt entweder einen einfach geschlitzten, verzahnten Dübel, der durch einen Spreizkörper spreizbar und mit einem Kopf in eine Buchse mit mindestens einem spreizbaren Verzahnungsbereich einrastbar ist.

Aus dem Dokument DE 24 52 398 A1 ist ein Dübel zur Verwendung bei einer Schrankmöbelanordnung bekannt geworden, der an seinen Seitenwandungen seitliche Klemmnasen aufweist, um eine Verdrehung des Dübels innerhalb des Einsteckloches oder innerhalb der Bohrung zu vermeiden. Diese Sperrmittel bewirken beim Einschieben des Dübels in das Bohrloch eine Art Verspannung, die zum einen das Durchschieben des Dübels durch das Bohrloch verhindert und zum anderen als Drehsicherung wirkt.

Das Dokument DE 11 36 813 B zeigt formschlüssige Verbindungen von miteinander zu verleimenden Holzteilen ohne hierfür eine Dübelanordnung zu verwenden.

### Aufgabe der Erfindung

Es ist Aufgabe der Erfindung, ein Schrankmöbel für Wohnfahrzeuge vorzuschlagen, bei welchem auch in ihrer Wandstärke dünnere oder schmälere Schrankwände aus furniertem Sperrholz Verwendung finden, ohne das eine Beschädigung der Wände durch auf ein Aufspreizen der verwendeten Dübel-SchraubVerbindung zu befürchten ist. Aufgabe ist es weiterhin, einen geeigneten Dübel hierfür vorzuschlagen.

### Lösung der Aufgabe

Diese Aufgabe wird durch ein Möbel gemäß den unabhängigen Ansprüchen 1 und 2 bzw. durch einen Dübel gemäß dem unabhängigen Anspruch 6 gelöst. Diese Aufgabe wird durch ein Möbel und insbesondere ein Schrankmöbel für Wohnfahrzeuge nach dem Oberbegriff des Anspruchs 1 dadurch gelöst, dass eine spezielle Dübelanordnung Verwendung findet, die ein Aufspreizen der sich gegenüberliegenden Schenkel des Dübels nur in Längsrichtung und nicht in Querrichtung der Wandung vollzieht. Dies wird dadurch erreicht, dass die verwendete Dübelanordnung spezielle Orientierungsmittel aufweist, die ein ausgerichtetes Einsetzen des Dübels in die stirnseitige Bohrung der zu befestigten Wandung derart vornimmt, dass die beiden, sich aufspreizenden Schenkel des Dübels nur in Längsrichtung und nicht in Querrichtung der jeweiligen Wandung angeordnet sind. Das Einschrauben einer Verbindungsschraube bewirkt daher keine Querkräfte auf die Schrankwand die zu einer Beschädigung des Furniers führen könnte. Insofern kann die Wandstärke zumindest einer Anschlusswand, welche stirnseitige Anschlussbohrungen aufweist, nochmals reduziert werden. Hierdurch ergibt sich zwar eine verminderte Restwandstärke zwischen Dübelbohrung und Seitenwandung. Diese Restwandstärke wird jedoch auf Grund der ausgerichteten Aufspreizrichtung des Dübels in Längsrichtung der Wandung nicht beansprucht. Insofern kann bei gleicher Dübelverwendung mit entsprechender Schraubverbindung wie bisher eine dünnere Wandstärke der Schrankwände verwendet werden.

Erfindungswesentlich ist, dass die Orientierungsmittel der Dübelanordnung durch einen endseitigen, zumindest abschnittsweise unrunden Orientierungsflansch am Dübel gebildet sind, wobei eine definierte Aufspreizrichtung der Schenkel des Dübels in Längsrichtung der Wandung der zweiten Schrankwand erfolgt und dass die erste Schrankwand an ihrer der zweiten Schrankwand zugewandten Oberfläche eine definiert ausgebildete Aussparung zur formschlüssigen Aufnahme des Orientierungsflansches des Dübels mit mittiger Durchgangsbohrung für eine Befestigungsschraube aufweist, wobei die zweite Schrankwand derart auf dem Dübel aufgesetzt ist, dass die Dübelspreizung der seitlichen Dübelschenkel in Längsrichtung der Wandung der zweiten Schrankwand erfolgt. In diesem Zusammenhang ist es erfindungswesentlich, dass der endseitige Orientierungsflansch des Dübels in Draufsicht als zwei sich überlappende Kreissegmente in Form einer Acht ausgebildet ist, die mittig die Aufnahmebohrung für die Befestigungsschraube aufweist. Insofern weist der als Haltemittel angesetzte Orientierungsflansch am Dübel einen im Wesentlichen achtförmigen Umfang auf.

Alternativ kann der Orientierungsflansch am Dübel des erfindungsgemäßen Möbels auch einen polygonalen Umfang aufweisen, oder auch rautenförmig ausgebildet sein. Maßgeblich ist die Möglichkeit der gezielten Ausrichtung des Dübels derart, dass die Dübel-Schenkel nur in Längsrichtung der Anschlusswandung aufspreizbar sind.

Besonders vorteilhaft ist die Verwendung einer an den Orientierungsflansch angepassten Aussparung derart, dass der Dübel mit seinem Orientierungsflansch in vorgegebener, bestimmter Ausrichtung in diese Aussparung in der Wandung eingesetzt wird.

Sofern es optisch ohne Belang ist, kann der Dübel auch durch eine Durchgangsbohrung durch die erste Schrankwand durchgesteckt werden, wobei die Aussparung zur Aufnahme des Orientierungsflansches dann an der gegenüberliegenden Seite eingebracht ist.

Erfindungswesentlich ist zudem, dass die Orientierungsmittel der Dübelanordnung durch einen endseitigen, zumindest abschnittsweise unrunden Orientierungsflansch am Dübel gebildet sind, wobei eine definierte Aufspreizrichtung der Schenkel des Dübels in Längsrichtung der Wandung der zweiten Schrankwand erfolgt und dass der Dübel mit seinem Orientierungsflansch auch in eine entsprechende Aussparung in der Stirnseite der zweiten Anschlusswandung quasi im Bereich der Dübelbohrung eingesetzt werden kann, um eine definierte Ausrichtung des Dübels zu bewerkstelligen. Maßgeblich ist die gezielte Aufspreizung der beiden Schenkel des Dübels in Längsrichtung und nicht in Querrichtung der mit der ersten Wandung zu verbindenden zweiten Schrankwand.

In den Unteransprüchen sind vorteilhafte und zweckmäßige Weiterbildungen des im Hauptanspruch angegebenen Möbels angegeben.

Besonders vorteilhaft ist die Verwendung zumindest einer zweiten Schrankwand mit vorzugsweise einer Wandstärke von nur 9mm, wobei ein beidseitiges Furnier von 1mm verwendbar ist. Mit der Verwendung eines Dübels von 6mm Durchmesser bleibt eine seitliche Restwandstärke von 1,5mm bestehen, die nicht einer Querbelastung auf Grund des richtig eingesetzten Dübels unterzogen ist. Der Dübel ist demnach als zylindrische Hülse beziehungsweise als Spreizdübel ausgebildet, so dass die zwei sich gegenüberliegenden Schenkel des Dübels sich als Spreizelemente auswirken, die einen Schlitz zwischen sich aufweisen. Hierdurch kann durch Einschrauben einer Verbindungsschraube ein gezieltes Aufspreizen des Dübels in Längsrichtung und nicht in Querrichtung der Anschlusswandung erfolgen.

Die Erfindung beansprucht auch einen Dübel, der zum Einsatz bei einer Schrankmöbelanordnung verwendet wird. Der Dübel weist als Orientierungsflansch einen doppelkreissegmentförmigen Endflansch auf, der als Orientierungshilfe zur Verwendung des Dübels dient. Dabei ist der Orientierungsflansch wenigstens abschnittsweise mit einem unrunden Umfang versehen.

### Zeichnungen

Weitere Einzelheiten und Vorteile der Erfindung sind in den Abbildungen dargestellt und in der nachfolgenden Beschreibung näher erläutert.

Es zeigen
- Figur 1: eine perspektivische Anordnung einer Verbindung für ein Schrankmöbel für ein Wohnfahrzeug mit einem eingesetzten Dübel in perspektivischer Ansicht, wobei der Dübel in einer ersten Seitenwandung orientiert ist,
- Figur 2: einen erfindungsgemäßen Dübel in Seitenansicht,
- Figur 3: eine Draufsicht auf den erfindungsgemäßen Dübel nach Figur 2,
- Figur 4: eine perspektivische Ansicht des Dübels,
- Figur 5: eine alternative Anordnung des Dübels mit einer Orientierungsaussparung innerhalb der zu verbindenden zweiten Schrankwand.

### Beschreibung der Ausführungsbeispiele

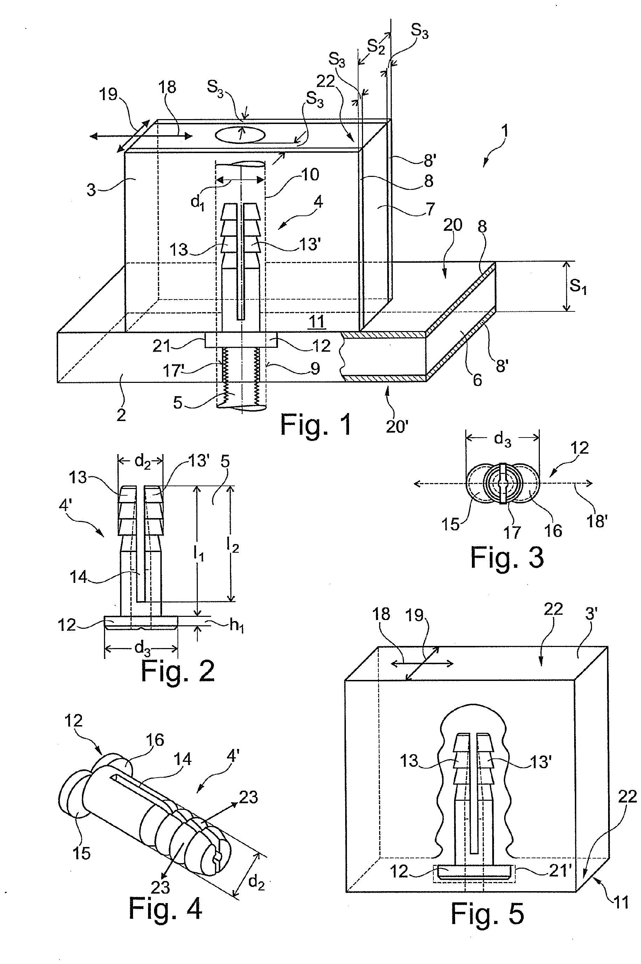

Figur 1 zeigt ein Schrankmöbel 1 für ein Wohnfahrzeug, wie Wohnmobil oder Wohnwagen oder dergleichen mit einer ersten Schrankwand 2 und einer zweiten, stirnseitig aufgesetzten Schrankwand 3, die über wenigstens eine Dübelanordnung 4 mit Dübel 4' mit Befestigungsschraube 5 miteinander verbunden sind.

Zur Erzielung einer verbesserten Leichtbauweise sind die erste und zweite Schrankwand 2, 3 in einer Wandstärke von s₁ = s₂ = 9mm ausgebildet, wobei die Schrankwände 2, 3 zum Beispiel eine Wandung aus einer Sperrholzplatte 6, 7 mit einem beidseitigen Außenfurnier 8, 8' ausgebildet sind. Die Verbindung beider Schrankwände 2, 3 erfolgt mittels einer Durchgangsbohrung 9 in der ersten Schrankwand und einer Sacklochbohrung 10 in der zweiten Schrankwand 3, wobei die Sacklochbohrung 10 in die Stirnseite 11 der zweiten Schrankwand 3 eingebracht ist.

Die in die Stirnseite der zweiten Schrankwand eingebrachte Sacklochbohrung 10 weist einen Durchmesser von d₁ = 6mm auf, sodass eine seitliche Wandstärke von s₃ von nur 1,5mm übrig bleibt. Diese geringe Restwandstärke darf nicht mit einer Querbelastung beaufschlagt werden.

Bei sei randbereichsnaher Montage des betreffenden Dübels kann es vorteilhaft sein, einen Schenkel des Dübels eher starr gegenüber einem zweiten, eher flexiblen Schenkel des Dübels auszubilden. Auf diese Weise ist die Herstellung der für einen Dübel üblichen Klemmverbindung mit dem Material verstärkt auf der Innenseite der betreffenden Schrankwand, auf welcher mehr Material zur Aufnahme der Spannkraft vorliegt, auszurichten.

Der in den Figuren 2 bis 4 dargestellten erfindungsgemäße Dübel zur Bildung der Dübelanordnung 4 weist einen Außendurchmesser d₂ ≐ d₁ ≐ 6mm auf zum Einsatz in die Sacklochbohrung 10. Der Dübel 4' weist endseitig einen Orientierungsflansch 12 mit einer Höhe h₁ ≐ 2mm auf und einem Durchmesser von d₃ ≐ 11mm. Die Länge l₁ des Dübels 4' beträgt ca. 20mm. Der Dübel 4' weist zwei seitliche Schenkel 13, 13' auf, die sich auf Grund des Längsschlitzes 14 seitlich aufspreizen können. Der Längsschlitz weist eine Länge von l₂ ≐ 18mm auf.

Der Dübel 4' ist in Stirnansicht in Figur 3 zu sehen. Dabei wird der Orientierungsflansch 12 durch zwei kreissegmentartige Ansätze 15, 16 gebildet, die dem Orientierungsflansch 12 die Form einer Acht geben. Ein innerer Kreis 17 entspricht dem Innendurchmesser beziehungsweise der Innenbohrung des Dübels 4'. Hier wird die Befestigungsschraube 5 eingesetzt.

Wie aus Figur 4 in perspektivischer Ansicht erkennbar, bildet der Orientierungsflansch 12 zwei kreissegmentartige Ansätze 15, 16, die sich seitlich flügelartig um den inneren Kreis 17 erstrecken.

Die Befestigungsschraube 5 ist ca. 34mm lang und als Kreuzschlitzschraube mit einem Schraubendurchmesser von ca. 3,5mm ausgebildet.

Der Zusammenbau der ersten und zweiten Schrankwand 2, 3 muss nun derart erfolgen, dass ein seitliches Aufspreizen der beiden Schenkel 13, 13' ausschließlich in Längsrichtung 18 und nicht in Querrichtung 19 der Seitenwandung 3 erfolgt, um keinen Druck auf die Seitenwand mit Funier 8, 8' auszuüben. Der Dübel 4' muss demnach in die Sacklochbohrung 10 derart eingesetzt werden, dass die beiden Schenkel 13, 13' sich nur in Längsrichtung 18 aufspreizen können, d.h. der Längsschlitz 14 ist in Querrichtung 19 der Schrankwand 3 orientiert. Diese spezielle Orientierung der Dübelanordnung 4 beziehungsweise des Dübels 4' wird dadurch erreicht, in dem gemäß Ausführungsbeispiel nach Figur 1 in die Oberfläche 20 eine Aussparung 21 eingefräst wird, die exakt der Formgebung des Orientierungsflansches 12 entspricht, wie dies die Draufsicht in Figur 3 zeigt. Dies geschieht durch Anordnung von drei nebeneinander liegenden Bohrungen entsprechend den Kreissegmentdarstellungen 15, 16 sowie dem Mittelkreis 17, der eine Durchgangsbohrung 17' für eine Schraube 5 bildet.

In diese Aussparung 21 in die Oberfläche 20 der ersten Schrankwand 2 wird dann der Orientierungsflansch 12 so formschlüssig eingesetzt, dass der Dübel 4' bei aufgesetzter zweiter Schrankwand 3 so ausgerichtet ist, dass die Aufspreizrichtung 23 der beiden seitlichen Schenkel 13, 13' ausschließlich in Längsrichtung 18 dieser Wandung 3 erfolgt.

Die Aussparung 21 könnte alternativ auch auf der gegenüberliegenden Wandung 20' angeordnet sein, wobei der Dübel dann als Durchsteckdübel verwendet wird (nicht in Figur 1 dargestellt).

Würde die Wandung 3 gegenüber der Darstellung in Figur 1 um 90° gedreht angeordnet sein, so müsste auch der Orientierungsflansch 21 um 90° gedreht in die erste Schrankwand 2 eingesetzt sein. Die Aussparung 21 richtet sich demnach in ihrer acht-förmigen Ausrichtung je nachdem, wie die darauf aufzusetzende zweite Schrankwand 3 orientiert ist. Grundsätzlich darf der Dübel innerhalb der Sacklochbohrung 10 nur so angeordnet sein, dass ein Aufspreizen der beiden seitlichen Schenkel nur in Längsrichtung 18 des Wandteils 3 erfolgen darf. Nur so wird es vermieden, dass eine Querbelastung auf das zweite Schrankwandteil 3 erfolgt, so dass keine Beschädigung des Furniers 8, 8' erfolgt.

Die alternative Darstellung des Ausführungsbeispiels nach Figur 5 zeigt die Einbringung der Aussparung 21' in die Stirnseite 11' der zweiten Schrankwand 3'. Die Aussparung 21' muss in ihrer Anordnung in die Unterseite 11' derart eingebracht sein, dass die beiden Schenkel 13, 13' sich ausschließlich in Längsrichtung 18 und nicht in Querrichtung 19 erstrecken können. Hierdurch wird ein Aufspreizen der Schenkel 13, 13' beim Einschrauben der Befestigungsschraube 5 ausschließlich in Längsrichtung 18 der zweiten Schrankwand 3' bewerkstelligt. Der acht-förmige Orientierungsflansch 12 dient demnach zur Ausrichtung des Dübels derart, dass keine Querbelastung auf die zweite Schrankwand 3' beim Einschrauben der Befestigungsschraube 5 erfolgt. Hierdurch kann die Wandstärke der zweiten Schrankwand entscheidend vermindert werden. Dies ergibt insgesamt eine beachtliche Gewichtseinsparung der Möbel bei gleichbleibender Festigkeit der Schrankverbindung.

Die Erfindung ist nicht auf das dargestellte und beschriebene Ausführungsbeispiel beschränkt. Sie erfasst auch vielmehr alle Abwandlungen im Rahmen der Schutzrechtsansprüche.

### Bezugszeichenliste:

- 1: Schrankmöbel
- 2: 1. Schrankwand
- 3: 2. Schrankwand
- 4: Dübelanordnung
- 4': Dübel
- 5: Befestigungsschraube
- 6: Sperrholzplatte / Wandung
- 7: Sperrholzplatte / Wandung
- 8: Außenfurnier
- 8': Außenfurnier
- 9: Durchgangsborhung
- 10: Sacklochbohrung
- 11: Stirnseite
- 12: Orientierungsflansch
- 13: Schenkel
- 13': Schenkel
- 14: Längsschlitz
- 15: kreissegmentartige Ansätze
- 16: kreissegmentartige Ansätze
- 17: innerer Kreis von 12
- 17': Durchgangsbohrung
- 18: Längsvorrichtung
- 19: Querrichtung
- 20: Oberfläche
- 20': Oberfläche
- 21: Aussparung
- 22: Wandung
- 23: Aufspreizrichtung von 13, 13'

## Patentansprüche

1. Möbel, insbesondere Schrankmöbel für Wohnfahrzeuge mit einer ersten Schrankwand (2) und einer hiermit mittels einer Dübelanordnung (4) mit Schraube (5) oder dergleichen zu verbindenden zweiten Schrankwand (3), die stirnseitig (11) wenigstens eine Aufnahmebohrung (10) für einen Dübel (4') aufweist, wobei die Dübelanordnung (4) Orientierungsmittel (12) für den Dübel (4') aufweist, die ein Aufspreizen der Schenkel (13, 13') des Dübels (4') in der zu verbindenden zweiten Schrankwand (3) ausschließlich in Längsrichtung (18) der Wandung (7, 22) der zweiten Schrankwand (3) vollzieht, **dadurch gekennzeichnet, dass** die Orientierungsmittel (12) der Dübelanordnung (4) durch einen endseitigen, zumindest abschnittsweise unrunden Orientierungsflansch (12) am Dübel (4') gebildet sind, wobei eine definierte Aufspreizrichtung (23) der Schenkel (13, 13') des Dübels (4') in Längsrichtung (18) der Wandung (7, 22) der zweiten Schrankwand (3) erfolgt und dass die erste Schrankwand (2) an ihrer der zweiten Schrankwand (3) zugewandten Oberfläche (20) eine definiert ausgebildete Aussparung (21) zur formschlüssigen Aufnahme des Orientierungsflansches (12) des Dübels (4') mit mittiger Durchgangsbohrung (17') für eine Befestigungsschraube (5) aufweist, wobei die zweite Schrankwand (3) derart auf dem Dübel (4') aufgesetzt ist, dass die Dübelspreizung der seitlichen Dübelschenkel (13, 13') in Längsrichtung (18) der Wandung (7, 22) der zweiten Schrankwand (3) erfolgt.

2. Möbel, insbesondere Schrankmöbel für Wohnfahrzeuge mit einer ersten Schrankwand (2) und einer hiermit mittels einer Dübelanordnung (4) mit Schraube (5) oder dergleichen zu verbindenden zweiten Schrankwand (3), die stirnseitig (11) wenigstens eine Aufnahmebohrung (10) für einen Dübel (4') aufweist, wobei die Dübelanordnung (4) Orientierungsmittel (12) für den Dübel (4') aufweist, die ein Aufspreizen der Schenkel (13, 13') des Dübels (4') in der zu verbindenden zweiten Schrankwand (3) ausschließlich in Längsrichtung (18) der Wandung (7, 22) der zweiten Schrankwand (3) vollzieht, **dadurch gekennzeichnet, dass** die Orientierungsmittel (12) der Dübelanordnung (4) durch einen endseitigen, zumindest abschnittsweise unrunden Orientierungsflansch (12) am Dübel (4') gebildet sind, wobei eine definierte Aufspreizrichtung (23) der Schenkel (13, 13') des Dübels (4') in Längsrichtung (18) der Wandung (7, 22) der zweiten Schrankwand (3) erfolgt und dass die mit der ersten Schrankwand (2) zu befestigende zweite Schrankwand (3) stirnseitig eine Aussparung (21') für die Dübelanordnung (4) aufweist, wobei der Orientierungsflansch (12) des Dübels (4') stirnseitig in die Aussparung (21') der Wandung (7, 22) derart eingesetzt ist, dass eine Aufspreizung der Schenkel (13, 13') des Dübels (4) ausschließlich in Längsrichtung (18) der Wandung (22) erfolgt.

3. Möbel nach Anspruch 1 oder 2, **dadurch gekennzeichnet, dass** der endseitige Orientierungsflansch (12) am Dübel (4') in Draufsicht als zwei sich überlappenden Kreissegmente (15, 16) mit mittiger Durchgangsbohrung (17) für eine Befestigungsschraube (5) in Form einer Acht ausgebildet ist.

4. Möbel nach Anspruch 1 oder 2, **dadurch gekennzeichnet, dass** der endseitige Orientierungsflansch (12) am Dübel (4) einen polygonen Umfang oder einen rautenförmigen Umfang aufweist.

5. Möbel nach einem der Ansprüche 1 bis 4, **dadurch gekennzeichnet, dass** die erste und insbesondere die zweite Schrankwand (3) vorzugsweise eine Wandstärke s₂=9mm aufweist, mit einer Furnierstärke des Außenfurniers (8, 8') von s₃=1mm aufweist, wobei ein Dübel von ca. 6mm Durchmesser verwendbar ist und wobei eine mit Furnier (8, 8') verbleibende Wandstärke s₃ seitlich der Dübelbohrung (10) von ca. 1,5mm vorgesehen ist.

6. Dübel zur Verwendung bei einer Schrankmöbelanordnung nach einem oder mehreren der Ansprüche 1 bis 3 und 5, wobei der Dübel (4') einen doppelkreissegmentförmigen Orientierungsflansch (12) als Orientierungshilfe aufweist, und der Dübel (4) mindestens einen Schenkel zur Herstellung der für einen Dübel (4') üblichen Klemmverbindung im Material umfasst, wobei der Orientierungsflansch (12) in seiner Längsrichtung (18') in Aufspreizrichtung (23) des Schenkels (13, 13') des Dübels (4') ausgerichtet ist, **dadurch gekennzeichnet, dass** der endseitige Orientierungsflansch (12) des Dübels (4') in Draufsicht als zwei sich überlappende Kreissegmente (15, 16) in Form einer Acht ausgebildet ist, die mittig die Aufnahmebohrung (17) für die Befestigungsschraube aufweist, und insofern der als Haltemittel angesetzte Orientierungsflansch (12) am Dübel (4') einen im Wesentlichen achtförmigen Umfang aufweist.

## Claims

1. Piece of furniture, in particular a cabinet for motorhomes, having a first cabinet wall (2) and a second cabinet wall (3), which is to be connected to the first cabinet wall by means of a wall-plug arrangement (4) with a screw (5) or the like and has at least one accommodating bore (10) for a wall plug (4') on the end side (11), wherein the wall-plug arrangement (4) has orientation means (12) for the wall plug (4'), said orientation means causing the legs (13, 13') of the wall plug (4') to expand in the second cabinet wall (3), which is to be connected, exclusively in the longitudinal direction (18) of the wall panel (7, 22) of the second cabinet wall (3), **characterized in that** the orientation means (12) of the wall-plug arrangement (4) are formed by an at least partially non-round orientation flange (12) at the end of the wall plug (4'), wherein a defined expansion direction (23) of the legs (13, 13') of the wall plug (4') runs in the longitudinal direction (18) of the wall panel (7, 22) of the second cabinet wall (3), and **in that**, on its surface (20) directed towards the second cabinet wall (3), the first cabinet wall (2) has a defined recess (21) for accommodating the orientation flange (12) of the wall plug (4') in a form-fitting manner, said orientation flange having a central through-passage bore (17') for a fastening screw (5), wherein the second cabinet wall (3) is positioned on the wall plug (4') such that the lateral wall-plug legs (13, 13') are expanded in the longitudinal direction (18) of the wall panel (7, 22) of the second cabinet wall (3).

2. Piece of furniture, in particular a cabinet for motorhomes, having a first cabinet wall (2) and a second cabinet wall (3), which is to be connected to the first cabinet wall by means of a wall-plug arrangement (4) with a screw (5) or the like and has at least one accommodating bore (10) for a wall plug (4') on the end side (11), wherein the wall-plug arrangement (4) has orientation means (12) for the wall plug (4'), said orientation means causing the legs (13, 13') of the wall plug (4') to expand in the second cabinet wall (3), which is to be connected, exclusively in the longitudinal direction (18) of the wall panel (7, 22) of the second cabinet wall (3), **characterized in that** the orientation means (12) of the wall-plug arrangement (4) are formed by an at least partially non-round orientation flange (12) at the end of the wall plug (4'), wherein a defined expansion direction (23) of the legs (13, 13') of the wall plug (4') runs in the longitudinal direction (18) of the wall panel (7, 22) of the second cabinet wall (3), and **in that** the second cabinet wall (3), which is to be fastened to the first cabinet wall (2), has, on its end side, a recess (21') for the wall-plug arrangement (4), wherein the orientation flange (12) of the wall plug (4') has its end side inserted into the recess (21') of the wall panel (7, 22) such that the legs (13, 13') of the wall plug (4) expand exclusively in the longitudinal direction (18) of the wall panel (22).

3. Piece of furniture according to Claim 1 or 2, **characterized in that**, as seen in plan view, the orientation flange (12) at the end of the wall plug (4') is designed in the form of two overlapping circle segments (15, 16), with a through-passage bore (17) for a fastening screw (5) in the centre, in a figure of eight.

4. Piece of furniture according to Claim 1 or 2, **characterized in that** the orientation flange (12) at the end of the wall plug (4) has a polygonal circumference or a rhomboidal circumference.

5. Piece of furniture according to one of Claims 1 to 4, **characterized in that** the first cabinet wall and, in particular, the second cabinet wall (3) preferably have a wall thickness s₂ = 9 mm, with the outer veneer (8, 8') having a thickness of s₃ = 1 mm, wherein use can be made of a wall plug of approximately 6 mm in diameter, and wherein a residual wall thickness s₃ of approximately 1.5 mm, including the veneer (8, 8'), is provided to the sides of the wall-plug bore (10).

6. Wall plug for use in a cabinet arrangement according to one or more of Claims 1 to 3 and 5, wherein the wall plug (4') has a double-circle-segment-shaped orientation flange (12) in the form of an orientation aid, and the wall plug (4) comprises at least one leg for producing the clamping connection in the material which is customary for a wall plug (4'), wherein the orientation flange (12) has its longitudinal direction (18') oriented in the expansion direction (23) of the legs (13, 13') of the wall plug (4'), **characterized in that**, as seen in plan view, the orientation flange (12) at the end of the wall plug (4') is designed in the form of two overlapping circle segments (15, 16) in a figure of eight, which has the accommodating bore (17) for the fastening screw in its centre, and, to this extent, the orientation flange (12) on the wall plug (4'), said orientation flange being attached as a retaining means, has an essentially figure-of-eight circumference.

## Revendications

1. Meuble, en particulier placard pour caravanes comprenant un premier élément mural (2) et un deuxième élément mural (3) à relier à celui-ci au moyen d'un ensemble à cheville (4) comprenant une vis (5) ou similaire, lequel deuxième élément mural comprend, du côté frontal (11), au moins un alésage de réception (10) pour une cheville (4'), l'ensemble à cheville (4) comprenant des moyens d'orientation (12) pour la cheville (4'), lesdits moyens effectuant, exclusivement dans la direction longitudinale (18) de la paroi (7, 22) du deuxième élément mural (3), un écartement des branches (13, 13') de la cheville (4') dans le deuxième élément mural (3) à relier, **caractérisé en ce que** les moyens d'orientation (12) de l'ensemble à cheville (4) sont formés par un rebord d'orientation (12) non circulaire au moins dans certaines régions, situé à une extrémité, sur la cheville (4'), une direction d'écartement (23) définie des branches (13, 13') de la cheville (4') s'effectuant dans la direction longitudinale (18) de la paroi (7, 22) du deuxième élément mural (3), et **en ce que** le premier élément mural (2) comprend, sur sa surface (20) tournée vers le deuxième élément mural (3), un évidement (21) formé de manière définie et servant à recevoir avec complémentarité de forme le rebord d'orientation (12) de la cheville (4') à l'aide d'un alésage traversant central (17') pour une vis de fixation (5), le deuxième élément mural (3) étant posé sur la cheville (4') de telle sorte que l'écartement de cheville des branches latérales de cheville (13, 13') s'effectue dans la direction longitudinale (18) de la paroi (7, 22) du deuxième élément mural (3).

2. Meuble, en particulier placard pour caravanes comprenant un premier élément mural (2) et un deuxième élément mural (3) à relier à celui-ci au moyen d'un ensemble à cheville (4) comprenant une vis (5) ou similaire, lequel deuxième élément mural comprend, du côté frontal (11), au moins un alésage de réception (10) pour une cheville (4'), l'ensemble à cheville (4) comprenant des moyens d'orientation (12) pour la cheville (4'), lesdits moyens effectuant, exclusivement dans la direction longitudinale (18) de la paroi (7, 22) du deuxième élément mural (3), un écartement des branches (13, 13') de la cheville (4') dans le deuxième élément mural (3) à relier, **caractérisé en ce que** les moyens d'orientation (12) de l'ensemble à cheville (4) sont formés par un rebord d'orientation (12) non circulaire au moins dans certaines régions, situé à une extrémité, sur la cheville (4'), une direction d'écartement (23) définie des branches (13, 13') de la cheville (4') s'effectuant dans la direction longitudinale (18) de la paroi (7, 22) du deuxième élément mural (3), et **en ce que** le deuxième élément mural (3) à fixer au premier élément mural (2) comprend, du côté frontal, un évidement (21') pour l'ensemble à cheville (4), le rebord d'orientation (12) de la cheville (4') étant inséré du côté frontal dans l'évidement (21') de la paroi (7, 22) de telle sorte qu'un écartement des branches (13, 13') de la cheville (4) s'effectue exclusivement dans la direction longitudinale (18) de la paroi (22).

3. Meuble selon la revendication 1 ou 2, **caractérisé en ce que** le rebord d'orientation (12), situé à une extrémité, sur la cheville (4') est formé, en vue de dessus, en forme de huit en tant que deux segments de cercle (15, 16) se chevauchant et dotés d'un alésage traversant central (17) pour une vis de fixation (5).

4. Meuble selon la revendication 1 ou 2, **caractérisé en ce que** le rebord d'orientation (12), situé à une extrémité, sur la cheville (4) présente une périphérie polygonale ou une périphérie en forme de losange.

5. Meuble selon l'une quelconque des revendications 1 à 4, **caractérisé en ce que** le premier et en particulier le deuxième élément mural (3) présentent de préférence une épaisseur de paroi s₂=9mm, avec une épaisseur de la feuille de placage extérieure (8, 8') de s₃=1mm, une cheville d'environ 6 mm de diamètre pouvant être utilisée et une épaisseur de paroi restante s₃ avec feuille de placage (8, 8') d'environ 1,5 mm étant prévue latéralement par rapport à l'alésage de cheville (10).

6. Cheville destinée à être utilisé dans un ensemble placard selon l'une quelconque ou plusieurs des revendications 1 à 3 et 5, la cheville (4') comprenant un rebord d'orientation (12) en forme de double segment de cercle en tant qu'auxiliaire d'orientation, et la cheville (4) comportant au moins une branche pour réaliser la liaison par serrage usuelle pour une cheville (4') dans le matériau, la direction longitudinale (18') du rebord d'orientation (12) étant orientée dans la direction d'écartement (23) de la branche (13, 13') de la cheville (4'), **caractérisée en ce que** le rebord d'orientation (12), situé à une extrémité, de la cheville (4') est formé, en vue de dessus, en forme de huit en tant que deux segments de cercle (15, 16) se chevauchant, lequel huit comprend centralement l'alésage de réception (17) pour la vis de fixation et, dans ce contexte, le rebord d'orientation (12), fixé en tant que moyen de retenue, sur la cheville (4') présente une périphérie sensiblement en forme de huit.
